# EUROPEAN PATENT APPLICATION

(11) **EP 4 737 028 A1**
(43) Date of publication of application: **06.05.2026**
(21) Application number: 24831377.7
(22) Date of filing: 15.04.2024
(51) Int. Cl.: B22D 17/20, B29C 45/52

(54) **BACKFLOW PREVENTION DEVICE AND INJECTION DEVICE PROVIDED WITH SAME**

(30) Priority: 30.06.2023 JP 2023108728
(71) Applicant: The Japan Steel Works, Ltd., Tokyo 141-0032 (JP)
(72) Inventor: YAMAGUCHI Takeshi, Tokyo 141-0032 (JP)
(74) Representative: Simmons & Simmons LLP (Munich)
(86) International application number: PCT/JP2024/014911
(87) International publication number: WO 2025/004502

(57) **Abstract**

The present invention provides a backflow prevention device that resists the intrusion of a piston ring into the gap between a backflow prevention ring and a cylinder. A backflow prevention device 4 of an injection device 3 has a backflow prevention ring 41 with an annular groove 42 facing the inner surface of a cylinder 32 of the injection device 3, and a piston ring 51 fitted in the annular groove 42. The annular groove 42 and the piston ring 51 each have a rear-section face 44, 55 in the injection direction of the injection device 3. The rear-section face 44 of the annular groove 42 and the rear-section face 55 of the piston ring 51 can contact each other only at respective radially inward sections 44B, 55B.

## Description

### Technical Field

This application is based on and claims priority to Japanese Patent Application No. 2023-108728, filed June 30, 2023, which is incorporated herein by reference in its entirety. The present invention relates to a backflow prevention device and to an injection apparatus provided with same.

### Background of Art

An injection apparatus for an injection molding machine is provided with a backflow prevention device that prevents backflow of the material to be injected during injection. Japanese Patent Application Laid-Open No. 7-314510 describes an injection apparatus having a screw accommodated in a cylinder, a pusher attached to the screw, and a backflow prevention device provided between the screw head of the screw and the pusher. When the screw moves forward during injection, the backflow prevention device is pressed against the pusher, preventing the material to be injected from flowing behind the pusher. The backflow prevention device includes a backflow prevention ring and a piston ring fitted into the backflow prevention ring.

### Summary of Invention

The piston ring is provided for the purpose of improving sealability between the backflow prevention device and the cylinder. However, because the screw moves at high speed during injection, the piston ring may deform and enter the gap between the backflow prevention ring and the cylinder. In this case, not only will the piston ring wear out, but the cylinder may be damaged by the piston ring that has entered the gap between the backflow prevention ring and the cylinder.

An object of the present invention is to provide a backflow prevention device that impedes the entry of a piston ring into the gap between the backflow prevention ring and the cylinder.

. The backflow prevention device of the present invention includes a backflow prevention ring with an annular groove and a piston ring fitted in the annular groove. A rear side surface of the annular groove in an injection direction and a rear side surface of the piston ring in the injection direction can come into contact with each other only at their respective radially inner portions.

According to the present invention, a backflow prevention device can be provided that impedes the entry of the piston ring into the gap between the backflow prevention ring and the cylinder. The above and other objects, features, and advantages of the present invention will become apparent from the following detailed description with reference to the accompanying drawings that illustrate examples of the present invention.

### Brief Description of the Drawings

[Fig. 1] Fig. 1 is a schematic front view of an injection molding machine according to a first embodiment.
[Fig. 2] Fig. 2 is an enlarged view of part A of Fig. 1.
[Fig. 3A] Fig. 3A is an enlarged view of part B in Fig. 2.
[Fig. 3B] Fig. 3B is an enlarged view of part C in Fig. 2.
[Fig. 4] Fig. 4 is a cross-sectional view taken along line 4-4 of Fig. 3A.
[Fig. 5] Fig. 5 is an enlarged view of a part corresponding to part B of Fig. 2 in a second embodiment.
[Fig. 6] Fig. 6 is an enlarged view of a part corresponding to part B of Fig. 2 in a third embodiment.
[Fig. 7] Fig. 7 is an enlarged view of a part corresponding to part B of Fig. 2 in a fourth embodiment.
[Fig. 8] Fig. 8 is an enlarged view of a part corresponding to part B in Fig. 2 in a fifth embodiment.
[Fig. 9] Fig. 9 is an enlarged view of a part corresponding to part B of Fig. 2 in a sixth embodiment.
[Fig. 10] Fig. 10 is an enlarged view of a part corresponding to part B of Fig. 2 in a seventh embodiment.
[Fig. 11A] Fig. 11A is an enlarged view of a part corresponding to part B in Fig. 2 in a comparative example.
[Fig. 11B] Fig. 11B is a diagram illustrating a problem in the comparative example.

### Description of the Embodiments

Embodiments of the present invention will be described below with reference to the drawings. The present invention can be suitably applied to a metal injection molding machine, and in particular to a metal injection molding machine that injects metals that have low viscosity when molten. However, the present invention can also be applied to an injection molding machine that injects resin. In the following description, the X-direction refers to the axial direction of cylinder 32, the injection direction being called the +X-direction, and the direction opposite to the injection direction being called the -X-direction. Terms such as "forward," "backward," "front," "rear," etc. are defined with respect to the injection direction. The term "radial direction" is defined with respect to central axis CL of cylinder 32.

### First Embodiment

### Overall Configuration of Injection Molding Machine

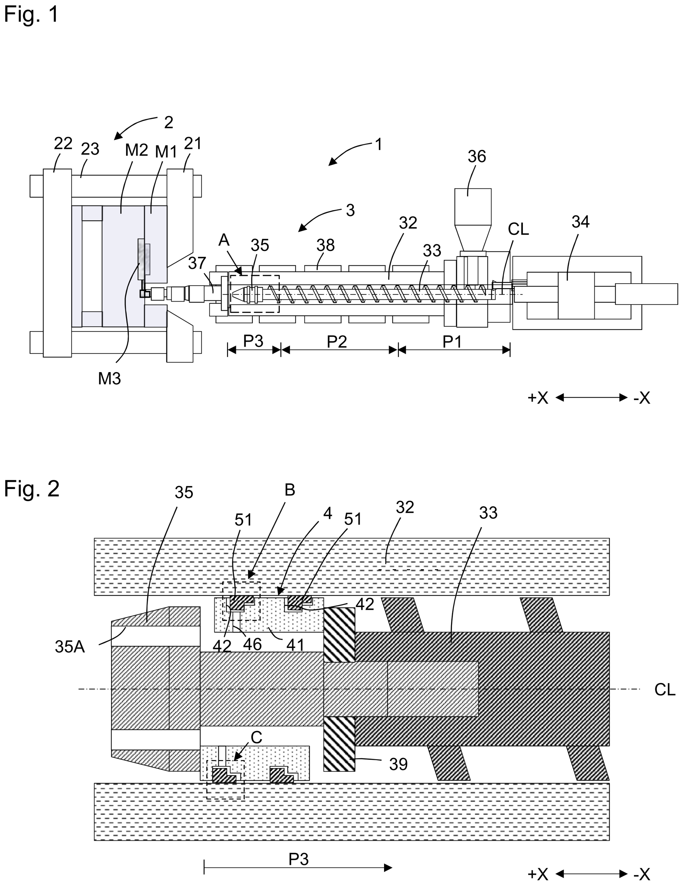

Fig. 1 shows a schematic front view of injection molding machine 1 according to the first embodiment. Injection molding machine 1 is a horizontal metal injection molding machine that injects molten metal such as magnesium alloys and aluminum alloys. Injection molding machine 1 is schematically composed of mold clamping device 2 that clamps the mold and injection apparatus 3 that heats, melts, and injects the metal material to be injected.

### Mold Clamping Device 2

Mold clamping device 2 includes fixed plate 21 that is fixed on a bed (not shown) and to which fixed mold M1 is attached, and movable plate 22 that can slide on the bed and to which movable mold M2 is attached. A mold clamping housing (not shown) that can slide on the bed is provided on the opposite side of movable plate 22 from fixed plate 21, and fixed plate 21 and the mold clamping housing are connected by a plurality of tie bars 23. A link mechanism (not shown) for opening and closing the mold is provided between movable plate 22 and the mold clamping housing. The link mechanism is driven by an electric ball screw. Instead of the link mechanism, a hydraulic mold clamping cylinder may be provided. Cavity M3, which is to be filled with molten metal, is formed between fixed mold M1 and movable mold M2.

### Injection apparatus 3

Injection apparatus 3 is provided on a base (not shown). Injection apparatus 3 includes hollow cylinder 32 for heating and melting the metal material to be injected, screw 33 accommodated in cylinder 32, and drive mechanism 34 for driving screw 33. Screw 33 is coaxial with cylinder 32. Screw 33 is driven in the +X- and -X-directions as well as rotated by drive mechanism 34. Heater 38 that heats and melts the metallic material is provided around the circumference of cylinder 32.

Cylinder 32 is generally divided from rear to front into supply section P1, compression section P2, and measuring section P3. Supply section P1 is provided with hopper 36 from which metal material in pellet form is supplied. The metal material is conveyed to compression section P2 while being heated by heater 38. The metal material is compressed, heated, and kneaded in compression section P2 to become molten, and is then transported to measuring section P3. Measuring section P3 measures the amount of molten metal injected in one injection cycle (shot). Screw 33 has screw head 35 at its tip in the X-direction. Injection nozzle 37 that supplies molten metal to cavity M3 is attached to the tip of cylinder 32.

### Backflow Prevention Device 4

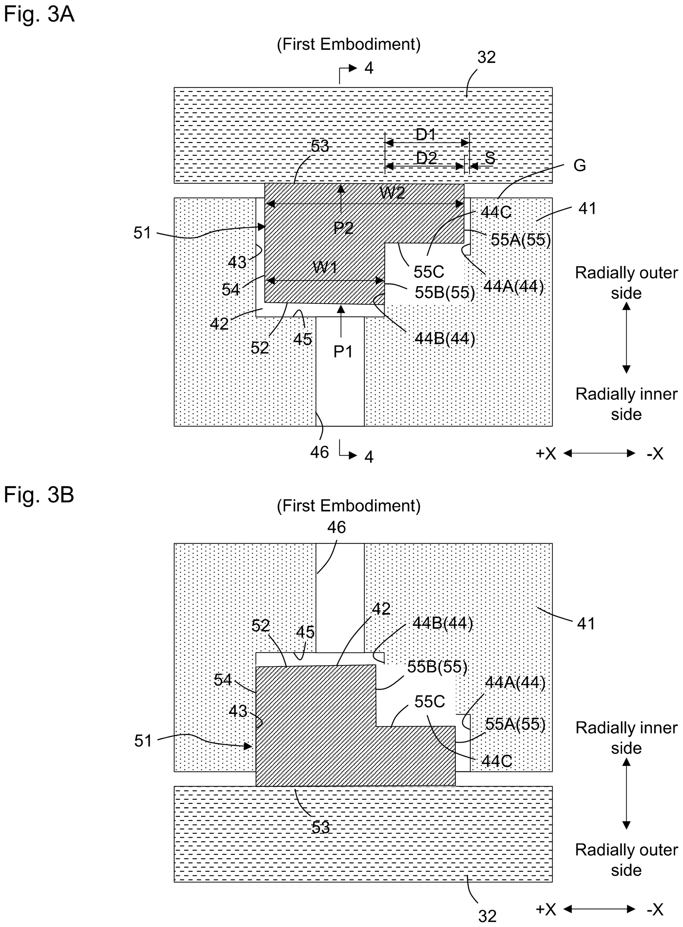

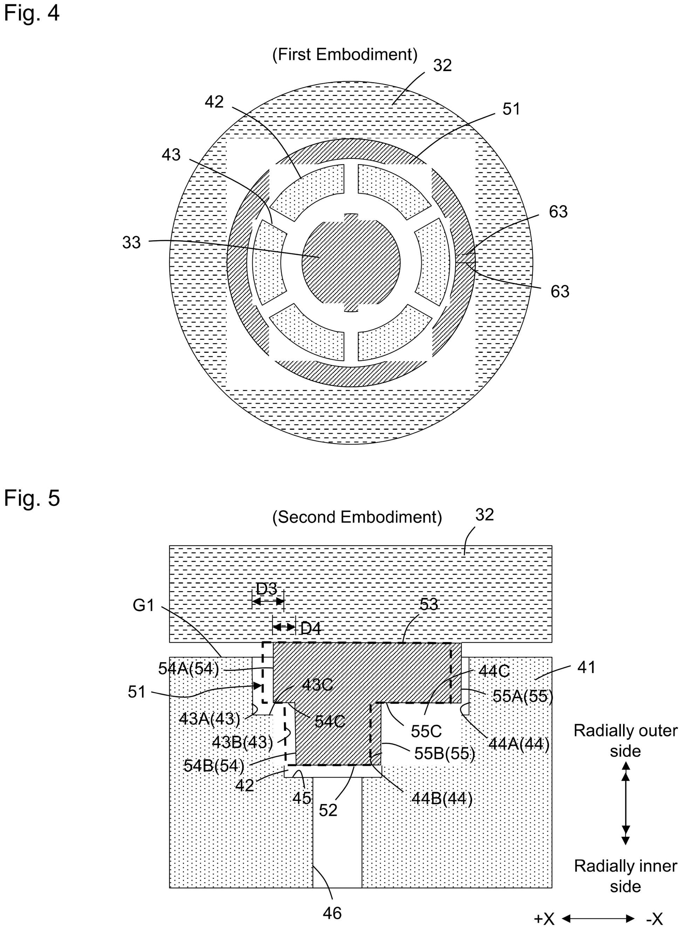

Fig. 2 shows a detailed partial view of the front part of cylinder 32 (enlarged view of part A in Fig. 1). For the sake of convenience, in Fig. 2, the upper side above central axis CL of cylinder 32 shows the state of backflow prevention device 4 during injection, and the lower side shows the state of backflow prevention device 4 during measuring. Fig. 3A is an enlarged view of part B of Fig. 2, and Fig. 3B is an enlarged view of part C of Fig. 2, each showing the positional relationship between annular groove 42 and piston ring 51. That is, Fig. 3A shows the state during injection (the state of backflow prevention ring 41 shown in the upper side of Fig. 2), and Fig. 3B shows the state during measuring (the state of backflow prevention ring 41 shown in the lower side of Fig. 2). Fig. 4 is a cross-sectional view along 4-4 line of Fig. 3A.

As shown in Fig. 2, measuring section P3 of cylinder 32 of injection apparatus 3 is provided with backflow prevention device 4 that prevents backflow of the metal material to be injected. Backflow prevention device 4 includes backflow prevention ring 41 made of a hollow cylindrical member of metal, and backflow prevention ring 41 includes annular grooves 42 that face the inner surface of cylinder 32 of injection apparatus 3. Backflow prevention device 4 includes piston rings 51 fitted into annular grooves 42 of backflow prevention ring 41. Backflow prevention ring 41, annular grooves 42, and piston rings 51 are coaxial with cylinder 32. Annular grooves 42 run around the outer periphery of backflow prevention ring 41 and have the same cross section at each angular position around central axis CL of cylinder 32.

In this embodiment, backflow prevention ring 41 has two annular grooves 42 with one piston ring 51 fitted in each annular groove 42, but there need be at least one of both annular groove 42 and piston ring 51.

Piston rings 51, which are circular sealing components fitted into respective annular grooves 42 of backflow prevention ring 41, separate the front part and the rear part of backflow prevention ring 41. Piston rings 51 are made of metal. As shown in Fig. 4, piston rings 51 each include two stepped ends 63 and are installed in annular grooves 42 such that the steps of the two ends 63 of each piston ring 51 overlap in the circumferential direction. Therefore, the steps of the two ends 63 shift in the circumferential direction in response to the pressure applied to inner peripheral surface 52 and outer peripheral surface 53 of each piston ring 51, whereby the diameters of piston rings 51 change. Piston rings 51 have the same cross section at each angular position around the central axis CL of the cylinder 32 with the exception of the vicinities of the two ends 63.

As shown in Fig. 2, pusher 39 made of a ring-shaped plate is mounted on screw head 35. Backflow prevention ring 41 is mounted on screw head 35 between the tip of screw head 35 at the front in the injection direction and pusher 39 at the rear in the injection direction. The outer diameters of screw head 35 and pusher 39 are larger than the inner diameter of backflow prevention ring 41, and the length of backflow prevention ring 41 in the X-direction is smaller than the distance separating screw head 35 and pusher 39 in the X-direction. As a result, backflow prevention ring 41 is movable in the X-direction while being restricted by screw head 35 and pusher 39.

As shown in part B of Fig. 2 and Fig. 3A, when molten metal is being injected, screw 33 moves forward in the +X-direction, and backflow prevention ring 41 moves backward relative to screw 33 in the -X-direction. Backflow prevention ring 41 abuts against pusher 39 and prevents the measured molten metal in front of screw 33 from leaking backward during injection (when screw 33 moves forward). As shown in part C of Fig. 2 and Fig. 3B, when measuring the molten metal, screw 33 moves backward in the -X-direction, and backflow prevention ring 41 moves forward relative to screw 33 in the +X-direction. Backflow prevention ring 41 abuts against screw head 35, but the molten metal behind pusher 39 passes through flow path 35A inside screw head 35 and is supplied to the space in front of screw head 35. In this way, backflow prevention ring 41 functions as a kind of valve.

Through hole 46, that passes radially through backflow prevention ring 41, is connected to annular groove 42 at the front in the injection direction. High-pressure molten metal flows into through hole 46 and applies radial outward pressure to piston ring 51. This pressure causes piston ring 51 to be pressed against the inner wall of cylinder 32, increasing the sealability of piston ring 51. Through hole 46 is not connected to annular groove 42 at the rear. However, some of the molten metal passes through the gap between front piston ring 51 and cylinder 32, the gap between backflow prevention ring 41 and cylinder 32, and rear annular groove 42, exerting pressure on inner surface 52 of rear piston ring 51. Thus, both front and rear piston rings 51 contribute to improved sealing.

The sealability is improved by providing through hole 46, but the large amount of pressure applied to piston ring 51 tends to contribute to rapid wearing of piston ring 51. Whether or not to provide through holes 46 is appropriately determined by taking into consideration sealability as opposed to reducing wear of piston ring 51. Through holes 46 may be provided in both annular grooves 42, may be provided only in rear annular groove 42, or through holes 46 may not be provided in either annular groove 42. However, providing through hole 46 in only front annular groove 42 facilitates equalization of the amount of wear between front and rear piston rings 51.

Front annular groove 42 and rear annular groove 42 have the same configuration with the exception of whether through hole 46 is connected. The two piston rings 51 have the same configuration. The following description will therefore mainly refer to front annular groove 42 and piston ring 51 fitted in front annular groove 42.

### Backflow prevention device 104 of a comparative example

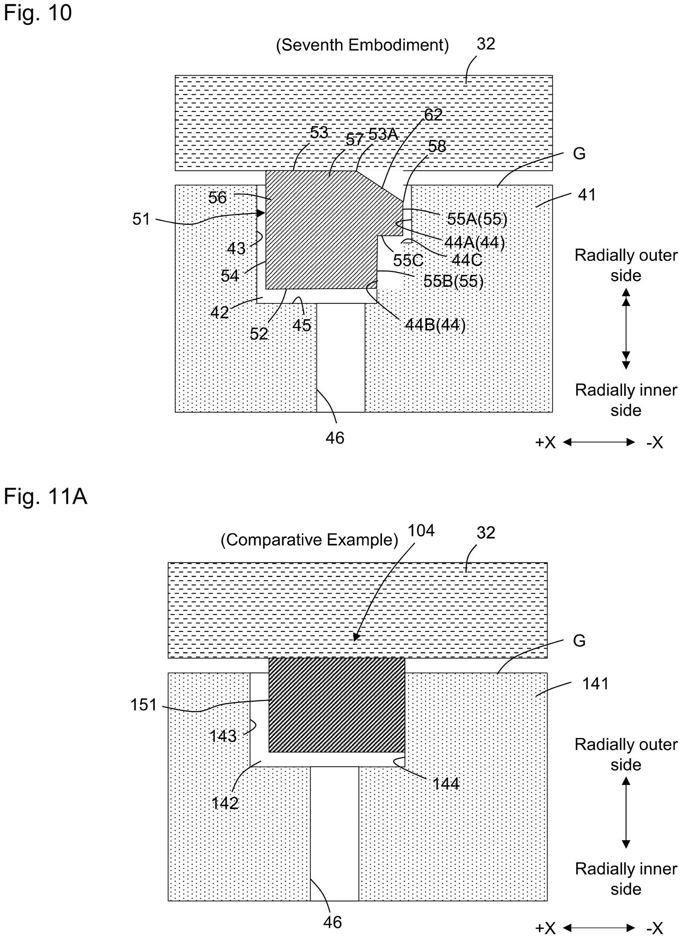

Backflow prevention device 104 of the comparative example will be described here. Fig. 11A is an enlarged view of the part corresponding to part B of Fig. 2. Annular groove 142 and piston ring 151 both have a rectangular cross section. As described above, since radially outward pressure is applied to piston ring 151, piston ring 151 is pressed against the inner wall of cylinder 32. During injection, the molten metal flows in the -X-direction through the gap between backflow prevention ring 141 and cylinder 32 and flows into annular groove 142, with the result that piston ring 151 is pressed against rear side surface 144 of annular groove 142. During measurement, piston ring 151 is pressed against front side surface 143 of annular groove 142 (not shown). However, since the speed of screw 33 during injection is higher than during measurement, the pressure with which piston ring 151 is pressed against the side surface of annular groove 142 during injection is greater than during measurement.

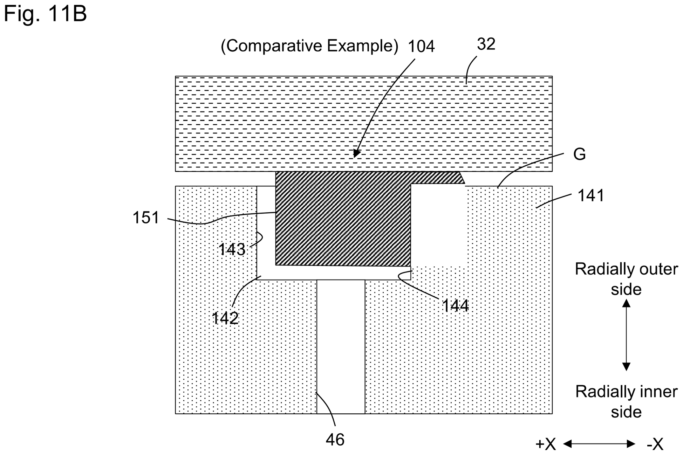

Figure 11B shows the deformation of piston ring 151. Piston ring 151 is made of a relatively soft metal. Therefore, when piston ring 151 is pressed radially outward and in the -X-direction, piston ring 151 may be deformed and a part thereof may enter gap G in the -X-direction between backflow prevention ring 141 and cylinder 32. If such a condition occurs, not only will piston ring 151 wear out, but the part of piston ring 151 that enters gap G between backflow prevention ring 141 and cylinder 32 may also damage cylinder 32.

### Shapes of annular groove 42 and piston ring 51

Referring mainly to Fig. 3A, the shapes of annular groove 42 and piston ring 51 in this embodiment will be described in more detail. Annular groove 42 has front side surface 43, rear side surface 44, and bottom surface 45. Bottom surface 45 is the deepest part of annular groove 42 and separates front side surface 43 and rear side surface 44. Rear side surface 44 has stepped portion 44C. Rear side surface 44 has radially outer portion 44A and radially inner portion 44B that are separated by stepped portion 44C. Front side surface 43 is a plane orthogonal to central axis CL of cylinder 32. Through hole 46 is connected to bottom surface 45.

Piston ring 51 has inner peripheral surface 52, outer peripheral surface 53, front side surface 54, and rear side surface 55. Inner peripheral surface 52 is at the deepest portion of annular groove 42 and separates front side surface 54 and rear side surface 55. Inner peripheral surface 52 faces bottom surface 45 of annular groove 42. Rear side surface 55 of piston ring 51 has stepped portion 55C. Rear side surface 55 of piston ring 51 has radially outer portion 55A and radially inner portion 55B that are separated by stepped portion 55C. Radially outer portion 55A, radially inner portion 55B, and stepped portion 55C face radially outer portion 44A, radially inner portion 44B, and stepped portion 44C, respectively, of rear side surface 44 of annular groove 42. Front side surface 54 is a plane orthogonal to central axis CL of cylinder 32 and faces front side surface 43 of annular groove 42.

Radially outer portion 44A of rear side surface 44 of annular groove 42 is rearward of radially inner portion 44B in the injection direction, and radially outer portion 55A of rear side surface 55 of piston ring 51 protrudes rearward in the injection direction (-X-direction) relative to radially inner portion 55B. The inner diameter of piston ring 51 is larger at its rear part in the injection direction than at its front part in the injection direction. Distance D1 in the X-direction between radially outer portion 44A and radially inner portion 44B of rear side surface 44 of annular groove 42 is greater than distance D2 in the X-direction between radially outer portion 55A and radially inner portion 55B of rear side surface 55 of piston ring 51.

Therefore, when piston ring 51 moves in the -X-direction relative to annular groove 42 during injection, radially inner portion 55B of rear side surface 55 of piston ring 51 can contact radially inner portion 44B of rear side surface 44 of annular groove 42, while radially outer portion 55A of rear side surface 55 of piston ring 51 cannot contact radially outer portion 44A of rear side surface 44 of annular groove 42. In other words, when radially inner portion 55B of rear side surface 55 of piston ring 51 contacts radially inner portion 44B of rear side surface 44 of annular groove 42, gap S (= distance D1 - distance D2) is formed between radially outer portion 55A of rear side surface 55 of piston ring 51 and radially outer portion 44A of rear side surface 44 of annular groove 42.

Thus, rear side surface 44 of annular groove 42 and rear side surface 55 of piston ring 51 can contact each other only at their respective radially inner portions 44B and 55B. In this embodiment, the change of the shapes of annular groove 42 and piston ring 51 from those of the comparative example impedes the entry of part of piston ring 51 into gap G on the -X-side between backflow prevention ring 41 and cylinder 32.

As described above, radially outward pressure is applied to piston ring 51, but in this embodiment, this pressure can be easily reduced or adjusted. The pressure with which piston ring 51 presses against the inner surface of cylinder 32 is generated by the pressure applied to inner peripheral surface 52 of piston ring 51. If the pressure applied to inner surface 52 of piston ring 51 is P1, the pressure with which piston ring 51 presses cylinder 32 is P2, the width of inner peripheral surface 52 of piston ring 51 is W1, and the width of outer peripheral surface 53 of piston ring 51 is W2, then P2 = (W1 / W2) x P1. Since P2 < P1, the abrasion of piston ring 51 can be suppressed. Moreover, since pressure P2 can be adjusted by W1 / W2, the sealability and the control of the abrasion of piston ring 51 can be balanced.

Other embodiments of the present invention will be described below. In the embodiments shown below, configurations and effects that are the same as those of the first embodiment are omitted from the explanation.

### Second Embodiment

Fig. 5 shows the second embodiment and is an enlarged view of the part corresponding to Part B of Fig. 2. In this embodiment, stepped portion 43C of annular groove 42 and stepped portion 54C of piston ring 51 are also formed on the forward side in the injection direction. Front side surface 43 of annular groove 42 has radially outer portion 43A and radially inner portion 43B that are separated by stepped portion 43C. Front side surface 54 of piston ring 51 has radially inner side portion 54A and radially inner side portion 54B that are separated by stepped portion 54C.

Radially outer portion 43A of front side surface 43 of annular groove 42 is positioned forward of radially inner portion 43B in the injection direction, and radially outer portion 54A of front side surface 54 of piston ring 51 protrudes forward in the injection direction (X-direction) relative to radially inner portion 54B. Distance D3 in the X-direction between radially outer portion 43A and radially inner portion 43B of front side surface 43 of annular groove 42 is greater than distance D4 in the X-direction between radially outer portion 54A and radially inner portion 54B of front side surface 54 of piston ring 51. Therefore, as shown by the dashed lines in Fig. 5, when piston ring 51 moves in the X-direction relative to annular groove 42 during measuring, radially inner portion 54B of front side surface 54 of piston ring 51 can contact radially inner portion 43B of front side surface 43 of annular groove 42, while radially outer portion 54A of front side surface 54 of piston ring 51 cannot contact radially outer portion 43A of front side surface 43 of annular groove 42.

As a result, front side surface 43 of annular groove 42 and front side surface 54 of piston ring 51 can contact each other only at their respective radially inner portions 43B and 54B. As described above, since the speed of screw 33 is slow during measuring, the possibility of piston ring 51 entering gap G1 on the +X-side between backflow prevention ring 41 and cylinder 32 is low. However, this embodiment can further reduce this possibility.

### Third Embodiment

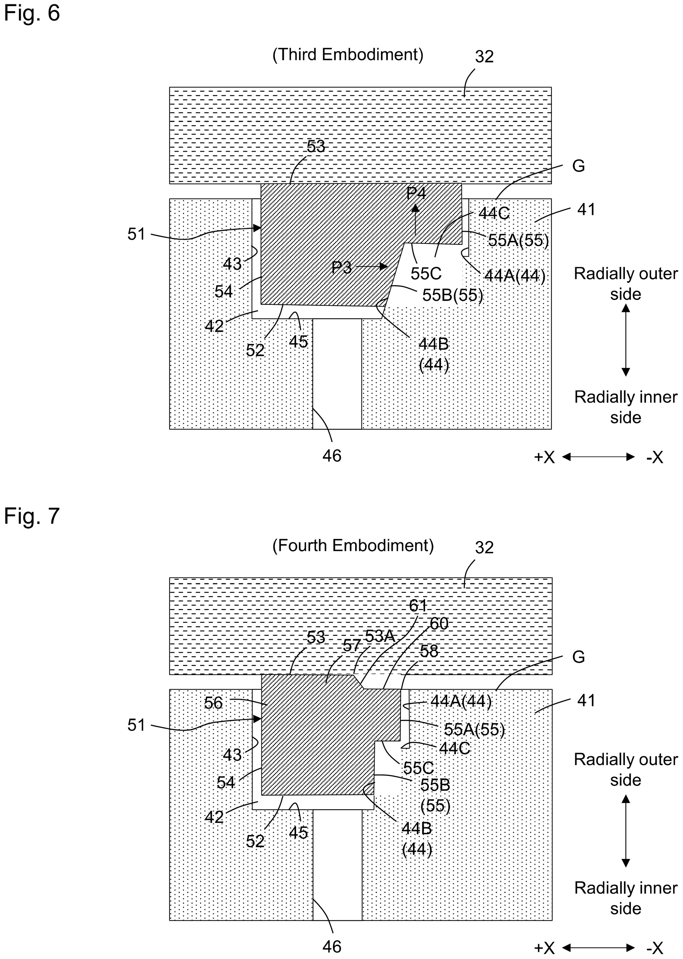

Fig. 6 shows the third embodiment and is an enlarged view of the part corresponding to Part B of Fig. 2. Radially inner portion 44B of rear side surface 44 of annular groove 42 and radially inner portion 55B of rear side surface 55 of piston ring 51 are inclined at the same angle relative to central axis CL of cylinder 32. Radially inner portion 44B of annular groove 42 and bottom surface 45 form an obtuse angle, and radially inner portion 55B of piston ring 51 and inner peripheral surface 52 form an obtuse angle. Therefore, during injection, radially inner portion 55B of rear side surface 55 of piston ring 51 comes into uniform contact with radially inner portion 44B of rear side surface 44 of annular groove 42. Radially outer portion 44A of rear side surface 44 of annular groove 42 and radially outer portion 55A of rear side surface 55 of piston ring 51 are orthogonal to central axis CL of cylinder 32. In this embodiment, pressure P3 applied to the piston ring 51 in the -X-direction is converted to pressure P4 directed radially outward and thus improves the sealability.

### Fourth Embodiment

Fig. 7 shows the fourth embodiment and is an enlarged view of the part corresponding to Part B of Fig. 2. Rear side surface 44 of annular groove 42 has radially outer portion 44A, radially inner portion 44B, and stepped portion 44C, radially outer portion 44A and radially inner portion 44B being separated by stepped portion 44C. The inner diameter of piston ring 51 is larger at its rear part in the injection direction than at its front part in the injection direction. When piston ring 51 moves in the -X-direction relative to annular groove 42 during injection, radially inner portion 55B of rear side surface 55 of piston ring 51 can contact radially inner portion 44B of rear side surface 44 of annular groove 42, while radially outer portion 55A of rear side surface 55 of piston ring 51 cannot contact radially outer portion 44A of rear side surface 44 of annular groove 42.

Piston ring 51 has accommodated portion 56 that is accommodated inside annular groove 42 and protruding portion 57 that is positioned outside annular groove 42. Outer peripheral surface 53 of piston ring 51 is positioned radially outside annular groove 42. At rearward end 53A in the injection direction of outer peripheral surface 53, which is forward in the injection direction relative to the rearmost end portion in the injection direction of accommodated portion 56 (radially outer portion 55A of rear side surface 55), the outer diameter of piston ring 51 becomes smaller in the rear portion in the injection direction than in the front portion in the injection direction. In this embodiment, piston ring 51 is farther away from gap G than in the first embodiment, and piston ring 51 is therefore less likely to enter gap G.

The surface that connects rearward end 53A of outer peripheral surface 53 and outermost part 58 of the rearward end portion of accommodated portion 56 in the radial direction includes cylindrical surface 60 whose central axis is central axis CL of cylinder 32 and inclined surface 61 that connects cylindrical surface 60 and rearward end 53A of outer peripheral surface 53 and that is inclined relative to central axis CL of cylinder 32. This configuration facilitates keeping piston ring 51 away from gap G, and impedes the entry of piston ring 51 into gap G. The diameter of cylindrical surface 60 is constant in the X-direction, but alternatively, may increase in the +X-direction.

### Fifth Embodiment

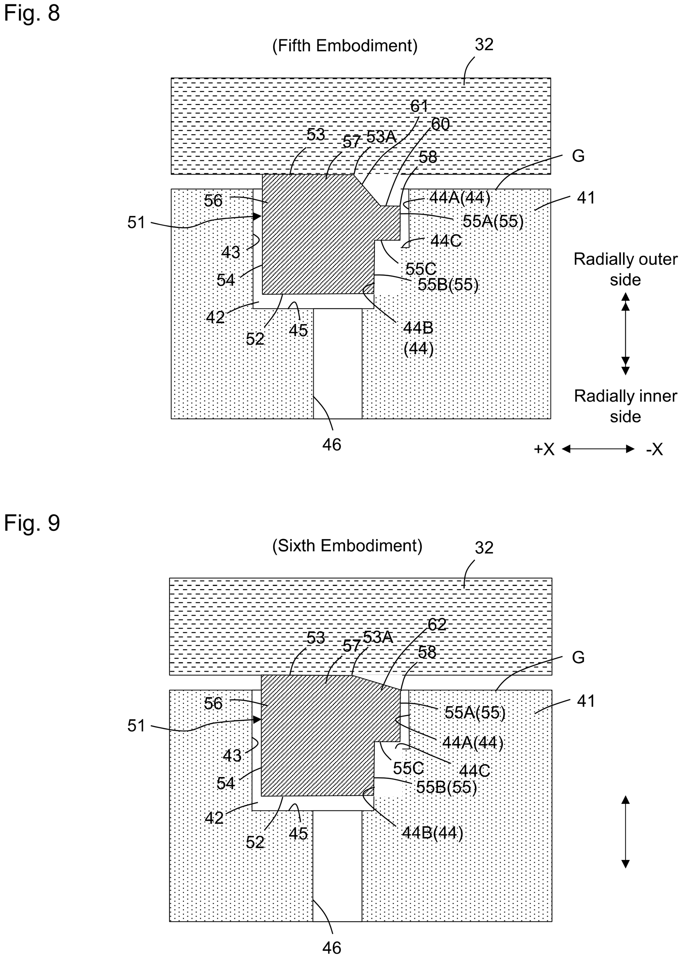

Fig. 8 shows the fifth embodiment and is an enlarged view of the part corresponding to Part B of Fig. 2. In this embodiment, radially outermost part 58 of the rearward end portion of accommodated portion 56 is positioned more deeply inside annular groove 42, but the configuration is otherwise the same as in the fourth embodiment. This embodiment has the same effects as the fourth embodiment. In this embodiment, piston ring 51 is farther away from gap G than in the first and fourth embodiments, and piston ring 51 is therefore even less likely to enter gap G.

As piston ring 51 wears with use, the thickness of protruding portion 57 gradually decreases, and eventually cylindrical surface 60 may come into contact with cylinder 32. However, because cylindrical surface 60 is located farther inside annular groove 42, cylindrical surface 60 will come into contact with cylinder 32 only after the passage of much more time as the thickness of piston ring 51 is reduced due to wear. In this embodiment, the life of piston ring 51 can be extended, and the frequency of replacing piston ring 51 can be decreased.

### Sixth Embodiment

Fig. 9 shows the sixth embodiment and is an enlarged view of the part corresponding to Part B of Fig. 2. All of surface 62, which connects rearward end 53A of outer peripheral surface 53 and radially outermost part 58 of the rearward end of accommodated portion 56, is inclined with respect to central axis CL of cylinder 32. The configuration is otherwise the same as in the fourth embodiment. Radially outermost portion 58 of the rearward end of accommodated portion 56 is located at approximately the same position as opening 59 of annular groove 42 in the radial direction. This embodiment has the same effects as the fourth embodiment, but the simple shape of surface 62 that connects rearward end 53A of outer peripheral surface 53 and radially outermost part 58 of the rearward end of accommodated portion 56 facilitates processing of piston ring 51.

### Seventh Embodiment

Fig. 10 shows the seventh embodiment and is an enlarged view of the part corresponding to Part B of Fig. 2. In this embodiment, radially outermost part 58 of the rearward end of accommodated portion 56 is inside annular groove 42, and the configuration is otherwise the same as in the sixth embodiment. This embodiment has the same effect as the fifth embodiment. That is, since outermost part 58 is located inside annular groove 42, outermost part 58 will come into contact with cylinder 32 only after the passage of a longer time as the thickness of piston ring 51 is reduced due to wear. This embodiment can extend the life of piston ring 51 and can decrease the frequency of replacing piston ring 51. Furthermore, because piston ring 51 is farther away from gap G in this embodiment than in the first embodiment, piston ring 51 is even less likely to enter gap G.

While certain preferred embodiments of the present invention have been shown and described in detail, it will be understood that various changes and modifications can be made without departing from the spirit or scope of the appended claims.

### Explanation of Reference Number

- 3: injection apparatus
- 4: backflow prevention device
- 32: cylinder
- 33: screw
- 41: backflow prevention ring
- 42: annular groove
- 44: rear side surface of annular groove
- 44A: radially outer portion of rear side surface of annular groove
- 44B: radial inner portion of rear side surface of annular groove
- 46: through hole
- 51: piston ring
- 53: outer peripheral surface
- 53A: rearward end of outer peripheral surface
- 55: rear side surface of piston ring
- 55A: radially outer portion of rear side surface of piston ring
- 55B: radially inner portion of rear side surface of piston ring
- 56: accommodated portion

## Claims

1. A backflow prevention device for an injection apparatus comprising:
a backflow prevention ring with at least one annular groove that faces an inner surface of a cylinder of an injection apparatus; and
at least one piston ring fitted in the at least one annular groove,
wherein the at least one annular groove and the at least one piston ring each include a rear side surface in an injection direction of the injection apparatus, and
wherein the rear side surface of the at least one annular groove and the rear side surface of the at least one piston ring can contact each other only at their respective radially inner side parts.

2. The backflow prevention device for the injection apparatus according to claim 1, wherein when the radially inner side part of the rear side surface of the at least one piston ring contacts the radially inner side part of the rear side surface of the at least one annular groove, a gap is formed between a radially outer side part of the rear side surface of the at least one piston ring and a radially outer side part of the rear side surface of the at least one annular groove.

3. The backflow prevention device according to claim 2, wherein the radially outer side part of the rear side surface of the at least one annular groove is rearward of the radially inner side part of the rear side surface of the at least one annular groove in the injection direction, and
wherein the radially outer side part of the rear side surface of the at least one piston ring protrudes rearward in the injection direction relative to the radially inner side part of the rear side surface of the at least one piston ring.

4. The backflow prevention device according to claim 3, wherein the radially outer side part of the rear side surface of the at least one annular groove and the radially inner side part of the rear side surface of the at least one piston ring are planes orthogonal to a central axis of the cylinder.

5. The backflow prevention device according to claim 4, wherein a distance between the radially outer side part and the radially inner side part of the rear side surface of the at least one annular groove is greater than a distance between the radially outer side part and the radially inner side part of the rear side surface of the at least one piston ring.

6. The backflow prevention device according to claim 3, wherein the radially inner side part of the rear side surface of the at least one annular groove and the radially inner side part of the rear side surface of the at least one piston ring are inclined relative to a central axis of said cylinder.

7. The backflow prevention device according to any one of claims 1 to 6, wherein the at least one piston ring includes an accommodated portion that is accommodated in the at least one annular groove and an outer peripheral surface that is located radially outside the at least one annular groove, and a rearward end of the outer peripheral surface in the injection direction is forward in the injection direction relative to a rearward end of the accommodated portion in the injection direction.

8. The backflow prevention device for the injection apparatus according to claim 7, wherein a surface that connects the rearward end of the outer peripheral surface and the rearward end of the accommodated portion comprises:
a cylindrical surface whose central axis is the central axis of the cylinder; and
an inclined surface that connects a forward end of the cylindrical surface in the injection direction and the rearward end of the outer peripheral surface and that is inclined relative to the central axis of the cylinder.

9. The backflow prevention device for the injection apparatus according to claim 7, wherein all of a surface that connects the rearward end of the outer peripheral surface and the rearward end of the accommodated portion is inclined with respect to the central axis of the cylinder.

10. The backflow prevention device for the injection apparatus according to claim 8 or 9, wherein an outermost portion of the rearward end of the accommodated portion in a radial direction is located at approximately the same position as an opening of the annular groove in the radial direction.

11. The backflow prevention device for the injection apparatus according to claim 8 or 9, wherein an outermost part of the rearward end of the accommodated portion in a radial direction is inside the annular groove.

12. The backflow prevention device for the injection apparatus according to any one of claims 1 to 11, wherein the at least one annular groove and the at least one piston ring each include a front side surface in the injection direction, and
wherein the front side surface of the at least one annular groove and the front side surface of the at least one piston ring can contact each other only at their respective radially inner portions.

13. The backflow prevention device for the injection apparatus according to any one of claims 1 to 11, wherein an inner diameter of the piston ring is larger at a rear part in the injection direction than at a front part in the injection direction.

14. An injection apparatus comprising:
a backflow prevention device according to any one of claims 1 to 13;
the cylinder;
a screw accommodated in the cylinder; and
an injection nozzle attached to a tip of the cylinder.
